# EUROPÄISCHE PATENTSCHRIFT

(11) **EP 2 616 785 B1**
(45) Veröffentlichungstag und Bekanntmachung des Hinweises auf die Patenterteilung: **09.11.2016**
(21) Anmeldenummer: 11754412.2
(22) Anmeldetag: 08.09.2011
(51) Int. Cl.: G01L 1/22, G01L 5/00, B63H 9/02

(54) **SCHIFF MIT MAGNUS-ROTOR UND KRAFTMESSVORRICHTUNG**
SHIP COMPRISING A MAGNUS ROTOR AND FORCE-MEASURING DEVICE
NAVIRE ÉQUIPÉ D'UN ROTOR À EFFET MAGNUS ET DISPOSITIF DE MESURE DE FORCE

(30) Priorität: 16.09.2010 DE 102010040905
(43) Veröffentlichungstag der Anmeldung: 24.07.2013
(73) Patentinhaber: Wobben Properties GmbH, 26607 Aurich (DE)
(72) Erfinder: ROHDEN, Rolf, 26607 Aurich (DE)
(74) Vertreter: Eisenführ Speiser
(86) Internationale Anmeldenummer: PCT/EP2011/065518
(87) Internationale Veröffentlichungsnummer: WO 2012/034916

(56) Entgegenhaltungen:
- WO-A2-2007/137844
- DE-U1-202009 009 904
- JP-A- H0 422 823
- JP-A- 2005 225 271
- US-A- 3 695 096

## Beschreibung

Die vorliegende Erfindung betrifft ein Schiff, insbesondere Frachtschiff, mit mindestens einem Magnus-Rotor zum Antrieb des Schiffs, welches einen Träger zur Aufnahme des Magnus-Rotors aufweist. Die Erfindung betrifft weiterhin einen Magnus-Rotor und einen Träger zur Aufnahme eines Magnus-Rotors.

Magnus-Rotoren werden auch als Flettner-Rotoren oder Segel-Rotoren bezeichnet. Schiffe mit Magnus-Rotoren als Antrieb sind im Stand der Technik bekannt. Beispielsweise ist eine solche Anordnung aus dem Buch "Die Segelmaschine" von Klaus D. Wagner erschienen im Erst Kabel Verlag GmbH, Hamburg, 1991, bekannt.

Aus WO 2006/133950 ist ein weiterentwickeltes Schiff mit einer Vielzahl von Magnus-Rotoren offenbart, wobei jedem der Magnus-Rotoren ein individuell ansteuerbarer elektrischer Motor zum Drehen des Magnus-Rotors zugeordnet ist.

Aus Druckschrift WO 2007/137844 ist ein weiterentwickelter Magnus-Rotor bekannt.

Magnus-Rotoren werden unter anderem dazu benutzt, auf einem Schiff unter Ausnutzung des Magnus-Effekts eine zusätzliche Antriebskraft zur Verfügung zu stellen. Der Magnus-Effekt beschreibt ein Auftreten einer Querkraft infolge einer Anströmung eines um seine Längsachse rotierenden Zylinders mit einem Fluid. Die Querkraft wirkt senkrecht zu der Anströmungs-Richtung. Die Strömung um den rotierenden Zylinder lässt sich als eine Überlagerung einer homogenen Strömung und eines Wirbels um den Körper auffassen. Durch die ungleichmäßige Verteilung der Gesamtströmung ergibt sich eine unsymmetrische Druckverteilung am Zylinderumfang. Das Schiff wird somit mit rotierenden bzw. drehenden Rotoren versehen, welche in der Windströmung eine zur wirksamen, d.h. mit der Höchstgeschwindigkeit korrigierten Windrichtung, senkrechte Kraft erzeugen. Die erzeugte Kraft ist ähnlich wie beim Segeln zum Vortrieb des Schiffes verwendbar. Die Querkraft wird dabei zu der Seite hin erzeugt, auf der sich die rotierende Oberfläche des Zylinders und die ihn umströmende Luft gleichsinnig bewegen.

Der Rotor muss zum Überleiten der Querkraft auf den Schiffskörper fest mit diesem verbunden sein. Bei bekannten Rotoren geschieht dies mittels eines Trägers zur Aufnahme eines Magnus-Rotors, an welcher der Rotor drehbar gelagert ist. Der Träger zur Aufnahme des Magnus-Rotors ist hierbei üblicherweise dazu ausgelegt, die radial auf die Lagerung einwirkenden Kräfte aufzunehmen. Die Höhe der von dem Magnus-Rotor erzeugten Querkraft ist dabei abhängig von der Größe des Rotors und dessen Laufgeschwindigkeit einerseits und der Geschwindigkeit des den Rotor umströmenden Windes andererseits. Zusätzlich zu der vom Magnus-Rotor selbst erzeugten Querkraft wirkt auf den Rotor allerdings zusätzlich noch die Kraft des Windes, der auf die ihm entgegenstehende Fläche des Rotors wirkt.

Es ist erstrebenswert, die auf einen Magnus-Rotor wirkenden Kräfte und insbesondere auch die auf den Träger zur Aufnahme des Magnus-Rotors wirkenden Kräfte zu kennen, um Beschädigungen durch Überlastung zu vermeiden. Weiterhin ist es erstrebenswert, die Richtung der auf den Rotor einwirkenden Kräfte bzw. die Richtung der auf die Aufnahme einwirkenden Kräfte bestimmen zu können um dadurch eine Steuerung des Rotors in Abhängigkeit von der Windrichtung vornehmen zu können.

Beides gelingt bei im Stand der Technik bekannten Magnus-Rotoren nur unbefriedigend, da hierfür zumindest die Windrichtung bestimmt werden muss. Letzteres ist nur mit unbefriedigender Genauigkeit möglich.

Der vorliegenden Erfindung liegt vor diesem Hintergrund die Aufgabe zu Grunde, ein Schiff, einen Magnus-Rotor, einen Träger zur Aufnahme eines Magnus-Rotors und ein Verfahren anzugeben, welche die vorstehend genannten Nachteile möglichst weitgehend abmildern.

Die Erfindung löst die ihr zu Grunde liegende Aufgabe bei einem Schiff der eingangs genannten Art, indem das Schiff mit den Merkmalen gemäß Anspruch 1 ausgebildet ist.

Das erfindungsgemäße Schiff weist eine Messeinrichtung auf, die an dem Träger zur Aufnahme des Magnus-Rotors angeordnet ist und zur Bestimmung einer Biegebeanspruchung des Trägers zur Aufnahme des Magnus-Rotors ausgebildet ist.

Die Erfindung macht sich hierbei die Erkenntnis zu Nutze, dass die auf den Träger zur Aufnahme des Magnus-Rotors einwirkenden Kräfte durch die zylindrisch ausgebildete Rotorfläche eines Magnus-Rotors zunächst aufgenommen bzw. erzeugt werden, und sodann mittels des Trägers zur Aufnahme des Magnus-Rotors in den Schiffskörper eingeleitet werden. Die Kräfte wirken hierbei zum einen im Wesentlichen in radialer Richtung auf die Rotationsachse sowohl des Rotors als auch des Trägers zur Aufnahme des Magnus-Rotors, jedoch in direkter Richtung auf die Verbindung des Trägers zur Aufnahme des Magnus-Rotors mit dem Schiff. Folglich entsteht an dem Bereich der Krafteinkopplung ein Biegemoment, was von dem Träger zur Aufnahme des Magnus-Rotors aufgenommen wird. Es kommt somit in dem Träger zur Aufnahme des Magnus-Rotors zur Ausprägung einer neutralen Faser, die nicht biegungsbeansprucht ist, und abseitig der neutralen Faser zu einer Biegebeanspruchung des Trägers zur Aufnahme des Magnus-Rotors. Die Biegebeanspruchung des Trägers zur Aufnahme des Magnus-Rotors ist mittels der Messeinrichtung bestimmbar und lässt direkte Rückschlüsse auf die auf den Rotor einwirkenden Kräfte zu.

Die Erfindung wird vorteilhaft dadurch weitergebildet, dass die Messeinrichtung zwei Dehnungssensoren aufweist, die an einer Umfangsfläche des Trägers zur Aufnahme des Magnus-Rotors angeordnet sind und zueinander winklig beabstandet sind. Vorzugsweise sind die zwei Dehnungssensoren in einem Winkel von 90° zueinander winklig beabstandet. Die Verwendung zweier an verschiedenen Stellen angeordneter Sensoren ermöglicht auf besonders vorteilhafte Weise die gleichzeitige Ermittlung zweier Biegezustände an des Trägers zur Aufnahme des Magnus-Rotors an unterschiedlichen Stellen entlang des Umfangs des Trägers zur Aufnahme des Magnus-Rotors. Die Dehnung an der Oberfläche des Trägers zur Aufnahme des Magnus-Rotors an der Stelle des Sensors entspricht dem Anteil der Biegebeanspruchung des Trägers zur Aufnahme des Magnus-Rotors in radialer Richtung an exakt der Stelle des Sensors. Dadurch, dass zwei Sensoren verwendet werden, ist die Richtung, in der die Träger zur Aufnahme des Magnus-Rotors biegebeansprucht wird, mittels trigonometrischer Beziehungen bestimmbar. Unter der Voraussetzung, dass der Winkel zwischen den beiden Dehnungssensoren bekannt ist, ist zudem auch der Betrag der Gesamt-Biegebeanspruchung aus den beiden an verschiedenen Stellen des Umfangs ermittelten Biegebeanspruchungs-Komponenten ebenfalls mittels trigonometrischer Beziehungen bestimmbar, oder vorzugsweise mittels des Satzes des Pythagoras.

Besonders bevorzugt ist ein erster Dehnungssensor bezogen auf eine Rotationsachse des Magnus-Rotors in Längsrichtung des Schiffs angeordnet, und ein zweiter Dehnungssensor ist bezogen auf die Rotationsachse des Magnus-Rotors in Querrichtung des Schiffs angeordnet. Diese Anordnung ist deswegen besonders vorteilhaft, weil der erste Dehnungssensor, der von der Rotor-Achse aus exakt in Fahrtrichtung positioniert ist, auch die Dehnung bzw. die Biegebeanspruchung des Trägers zur Aufnahme des Magnus-Rotors exakt in Fahrtrichtung bzw. Längsrichtung des Schiffs bestimmbar macht. Der zweite Dehnungssensor indes macht die dazu orthogonale Dehnung bzw. Biegebeanspruchung in Querrichtung zu der Längsachse des Schiffs bestimmbar. Hierbei ist unter Dehnung sowohl positive Dehnung - im Sinne einer Streckung - als auch negative Dehnung im Sinne einer Stauchung zu verstehen. Das Ermitteln der Richtung, aus welcher die vom Magnus-Rotor in das Schiff eingeleitete Kraft wirkt sowie deren Betrag sind durch die Anordnung der zwei Dehnungssensoren rechtwinklig zueinander deutlich vereinfacht.

In einer bevorzugten Ausführungsform sind der erste und zweite Dehnungssensor in einer horizontalen Ebene angeordnet. Hierdurch wird die Berechnung der Biegebeanspruchung nach Richtung und Betrag weiter vereinfacht.

In einer weiteren bevorzugten Ausführungsform der vorliegenden Erfindung ist der Träger zur Aufnahme des Magnus-Rotors mindestens in dem Abschnitt, in welchem der erste und der zweite Dehnungsmesser angeordnet sind, zylindrisch ausgebildet. Eine zylindrische oder wahlweise hohlzylindrische Ausbildung des Trägers zur Aufnahme des Magnus-Rotors in diesem Abschnitt begünstigt ein isotropes Biegungsverhalten. Ungeachtet eventueller Strukturanisotropien, die durch das verwendete Material des Trägers zur Aufnahme des Magnus-Rotors bedingt sein können, ist bei einer zylindrischen Ausbildung des Trägers zur Aufnahme des Magnus-Rotors zu erwarten, dass die Biegebeanspruchung des Trägers zur Aufnahme des Magnus-Rotors immer einer bestimmten Kraft entspricht, gleich aus welcher Richtung diese Kraft eingeleitet wird.

Gemäß einer weiteren voreilhaften Ausführungsform der Erfindung sind der erste Dehnungssensor und der zweite Dehnungssensor jeweils zur Ausgabe eines Signals eingerichtet, welches repräsentativ für die von den Sensoren erfasste Dehnung ist. Die von den Dehnungssensoren ausgegebenen Datensignale sind vorzugsweise analog oder digital ausgebildet, so dass eine Weiterverarbeitung der Signale mit verschiedenen Methoden ermöglicht ist.

Vorzugsweise weist das Schiff eine Datenverarbeitungsanlage zur Aufnahme der ausgegebenen Signale auf, die zur Ermittlung eines Gesamtkraftvektors auf Basis der ausgegebenen Signale eingerichtet ist. Die Datenverarbeitungsanlage ist vorzugsweise dazu ausgebildet, mittels des Verhältnisses der Stärken der ausgegebenen Signale des ersten Dehnungssensors und des zweiten Dehnungssensors die Richtung des Gesamtkraftvektors zu bestimmen, und/oder mittels des Verhältnisses der Stärken der ausgegebenen Signale sowie den Werten der ausgegebenen Signale den Betrag des Kraftvektors zu bestimmen. Die Datenverarbeitungsanlage nutzt hierbei vorzugsweise trigonometrische Funktionen, und macht sich folgende Erkenntnisse zu Nutze. Die Signale des ersten Dehnungssensors und des zweiten Dehnungssensors repräsentieren eine Dehnung an der Oberfläche des Trägers zur Aufnahme des Magnus-Rotors. Die Dehnung wiederum entspricht bezogen auf die Oberfläche bzw. die Rotationsache der Rotoraufnahme einer Biegebeanspruchung des Trägers zur Aufnahme des Magnus-Rotors. Diese korrespondiert ihrerseits mit einer Kraft in radialer Richtung, die eine Kraftkomponente der insgesamt auf den Magnus-Rotor einwirkenden Kraft ist. Wenn der Winkel zwischen den beiden Dehnungssensoren bekannt ist und die Datenverarbeitungsanlage zur Bestimmung der beiden (die von den Dehnungssensoren ausgegebenen Signale repräsentierenden) Kraftkomponenten in den jeweiligen, der Anordnung der Dehnungssensoren entsprechenden Richtungen eingerichtet ist, ist auf dieser Grundlage auch die Ermittlung des aus den Einzelkomponenten zusammengesetzten Gesamtkraftvektors durchführbar.

Der erste Dehnungssensor und/oder der zweite Dehnungssensor weisen vorzugsweise jeweils mindestens einen Dehnungsmessstreifen und/oder mindestens ein Dehnungsmessröhrchen, und/oder mindestens einen optischen Dehnungssensor auf. Unter einem Dehnungsmessstreifen wird hierbei beispielsweise ein Draht, Folien-, Halbleiter- oder Rosettendehnungsmessstreifen verstanden. Unter Dehnungsmessröhrchen wird eine Messeinrichtung verstanden, in der ein Ferritkern sich innerhalb eines Spulenröhrchens entsprechend einer Dehnung an der Oberfläche, an welcher die Messeinrichtung angeordnet ist, bewegt, woraufhin die veränderte Induktivität festgestellt und quantitativ ausgegeben wird. Als optischer Dehnungssensor ist beispielsweise ein Faser-Bragg-Sensor verwendbar.

Die Erfindung betrifft weiterhin einen Träger zur Aufnahme des Magnus-Rotors für einen Magnus-Rotor, der zum Antrieb eines Schiffs eingerichtet ist. Der erfindungsgemäße Träger zur Aufnahme des Magnus-Rotors löst die zu Grunde liegende Aufgabe, indem er gemäß Anspruch 10 ausgebildet ist und eine Messeinrichtung zur Bestimmung einer Biegebeanspruchung des Trägers zur Aufnahme des Magnus-Rotors aufweist.

Die Erfindung betrifft weiterhin ein Verfahren zur Bestimmung des Vorschubs eines Magnus-Rotors. Das Verfahren löst die der Erfindung zu Grunde liegenden Aufgabe gemäß Anspruch 11, indem die Biegebeanspruchung eines Trägers zur Aufnahme des Magnus-Rotors mittels einer dazu ausgebildeten Messeinrichtung erfasst wird, und das Verfahren die folgenden Schritte umfasst: Ausgabe eines die Biegebeanspruchung des Trägers zur Aufnahme des Magnus-Rotors in Fahrtrichtung des Schiffs repräsentierenden Signals mittels eines ersten Dehnungssensors der Messeinrichtung, Bestimmen der Kraftkomponente, welche der von dem ersten Dehnungssensor erfassten Biegebeanspruchung entspricht, als Vorschubkraft.

Vorzugsweise umfasst das Verfahren die zusätzlichen Schritte: Ausgabe eines die Biegebeanspruchung des Trägers zur Aufnahme des Magnus-Rotors in Querrichtung des Schiffs repräsentierenden Signals mittels eines zweiten Dehnungssensors der Messeinrichtung, Bestimmen der Kraftkomponente, welche der von dem zweiten Dehnungssensor erfassten Biegebeanspruchung entspricht, als Querkraft. Vorzugsweise umfasst das Verfahren die zusätzlichen Schritte: Bestimmen der Richtung des Gesamt-Kraftvektors mittels des Verhältnisses der Stärken der ausgegebenen Signale des ersten und zweiten Dehnungssensors, und/oder Bestimmen des Betrags des Gesamt-Kraftvektors mittels des Verhältnisses der Stärken der ausgegebenen Signale sowie den Werten der ausgegebenen Signale. Mittels des Verfahrens ist folglich ein Gesamt-Kraftvektor ermittelbar, welcher sowohl die Stärke als auch die Richtung der von dem Magnus-Rotor auf das Schiff übertragenen Kraft repräsentiert.

Nachfolgend wird die vorliegende Erfindung anhand bevorzugter Ausführungsformen und unter Bezugnahme auf die angehängten Zeichnungen näher beschrieben. Hierbei zeigt:
- Figur 1: eine perspektivische Ansicht eines Schiffs gemäß der vorliegenden Erfindung,
- Figur 2: eine schematische Querschnittsansicht eines Magnus-Rotors gemäß der vorliegenden Erfindung,
- Figur 3: eine schematische Draufsicht auf einen Magnus-Rotor eines Schiffs, mit einem Träger zur Aufnahme des Magnus-Rotors,
- Figur 4: die Darstellung aus Figur 3 mit einem Vektordiagramm,
- Figur 5: die Darstellung aus Figur 3 und 4 mit einem Vektordiagramm, und
- Figur 6: die Darstellung aus Figur 5 mit einem alternativen Vektordiagramm.

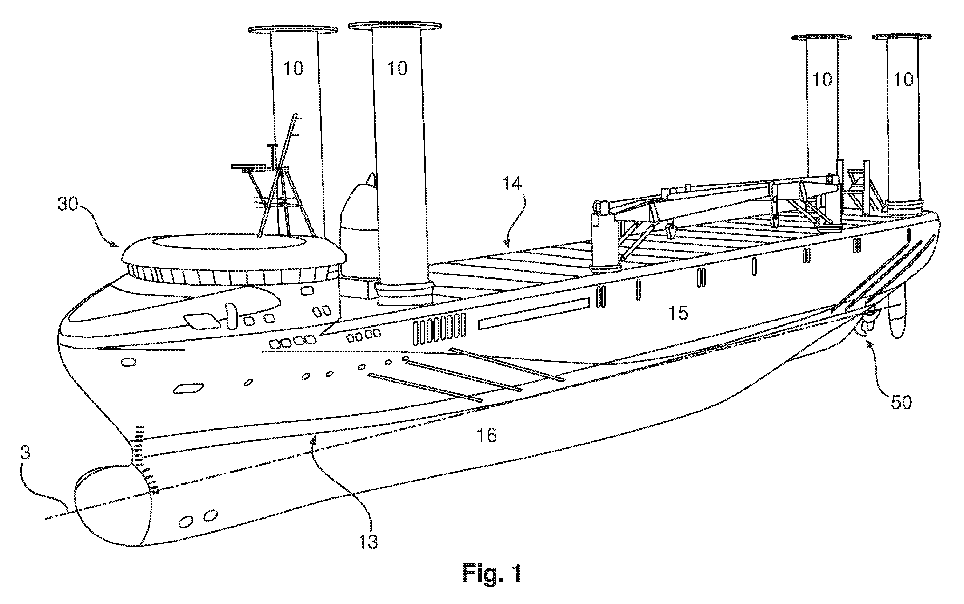

Fig. 1 zeigt eine schematische Darstellung eines Schiffes 1 gemäß einem ersten Ausführungsbeispiel. Das Schiff 1 weist dabei einen Rumpf bestehend aus einem Unterwasserbereich 16 und einen Überwasserbereich 15 auf. Ferner kann das Schiff 1 z. B. vier Magnus-Rotoren bzw. Flettner-Rotoren 10 aufweisen, welche an den vier Ecken des Rumpfes angeordnet sein können. Das Schiff 1 weist im Vorschiff eine Brücke 30 auf. Das Schiff 1 weist unter Wasser eine Schraube 50 auf. Für eine verbesserte Manövrierfähigkeit kann das Schiff 1 ebenfalls Querstrahlruder aufweisen, wobei vorzugsweise eines am Heck und eines bis zwei Querstrahlruder am Bug vorgesehen sind. Vorzugsweise sind diese Querstrahlruder elektrisch angetrieben. Die Brücke 30 sowie alle Aufbauten oberhalb des Wetterdecks 14 weise eine aerodynamische Formgebung auf, um den Windwiderstand zu reduzieren. Dies wird insbesondere dadurch erreicht, dass scharfe Kanten und scharfkantige Anbauteile im Wesentlichen vermieden werden. Um den Windwiderstand zu minimieren, werden möglichst wenige Aufbauten vorgesehen.

Das Schiff 1 gemäß dem ersten Ausführungsbeispiel stellt insbesondere ein Frachtschiff dar, das speziell für den Transport von Windenergieanlagen und deren Komponenten ausgelegt ist. Der Transport von Windenergieanlagen sowie deren entsprechenden Komponenten ist mit handelsüblichen Containerschiffen nur bedingt realisierbar, da die Komponenten einer Windenergieanlage einen entsprechenden Raumbedarf darstellen, welcher nicht den handelsüblichen Containermaßen entspricht, während die Massen einzelner Komponenten im Vergleich zu ihrem Raumbedarf gering sind. Beispielhaft seien hier Rotorblätter oder Gondelverkleidungen von Windenergieanlagen genannt, die überwiegend als voluminöse GFK-Strukturen mit wenigen Tonnen Gewicht ausgebildet sind.

Die z. B. vier Magnus-Rotoren 10 stellen hierbei windbetriebene Antriebe für das erfindungsgemäße Schiff 1 dar. Es ist vorgesehen, das Schiff 1 zumindest teilweise mit den Magnus-Rotoren anzutreiben.

Die Formgebung des Rumpfes des Schiffes 1 ist derart ausgelegt, dass das Heck möglichst weit aus dem Wasser herausragt. Damit ist einerseits die Höhe des Hecks über dem Wasserspiegel, andererseits aber auch die Länge des Heckabschnittes gemeint, welcher ebenfalls über der Wasseroberfläche schwebt. Diese Ausgestaltung dient dazu, das Wasser frühzeitig vom Rumpf zu lösen, um eine hinter dem Schiff 1 herlaufende Welle zu vermeiden, da diese zu einem hohen Widerstand des Rumpfes führt, weil auch diese vom Schiff 1 hervorgerufene Welle durch die Maschinenleistung geschafft wird, welche dann aber nicht mehr zum Vortrieb zur Verfügung steht.

Der Bug des Schiffes 1 ist über eine relativ lange Strecke scharf geschnitten. Das Unterwasserschiff ist bis zu einer Höhe von ca. 3 m über der Konstruktions-Wasserlinie im Hinblick auf hydrodynamische Aspekte widerstandsoptimiert ausgestaltet.

Somit ist der Rumpf des Schiffes 1 nicht auf eine maximale Tragfähigkeit, sondern auf einen minimalen Widerstand (aerodynamisch und hydrodynamisch) ausgelegt.

Die Aufbauten des Schiffes 1 sind strömungsgünstig ausgestaltet. Dies wird insbesondere dadurch erreicht, dass alle Flächen als glatte Flächen ausgestaltet sind. Durch die Ausgestaltung der Brücke 30 sollen vor allen Dingen Nachlaufwirbel vermieden werden, so dass die Ansteuerung der Magnus-Rotoren 10 möglichst ungestört erfolgen kann. Die Brücke 30 wird vorzugsweise am Bug des Schiffes 1 angeordnet. Eine Anordnung der Aufbauten in der Mitte des Schiffes 1 ist ebenfalls möglich, würde aber die Beladung bzw. das Löschen der Ladung unnötig behindern, weil die Aufbauten damit genau über der Mitte des Laderaumes angeordnet wären.

Alternativ dazu kann die Brücke 30 am Heck des Schiffes 1 angeordnet werden, dies würde sich jedoch dahingehend als nachteilig erweisen, dass die Magnus-Rotoren 10 eine einwandfreie Sicht nach vorne beeinträchtigen würden.

Der Antrieb bzw. der Vortrieb des Schiffes 1 ist für einen Windantrieb optimiert, so dass es sich bei dem Schiff 1 der vorliegenden Erfindung um ein Segelschiff handelt.

Die Magnus-Rotoren 10 können z. B. im Bereich der Eckpunkte der Laderäume angeordnet werden, so dass sie eine rechteckige Fläche aufspannen können. Es sei jedoch darauf hingewiesen, dass ebenfalls eine andere Anordnung möglich ist. Die Anordnung der Magnus-Rotoren 10 beruht auf einem Gedanken, dass eine bestimmte Rotorfläche erforderlich ist, um die gewünschte Antriebsleistung durch die Magnus-Rotoren 10 zu erzielen. Durch eine Aufteilung dieser benötigten Oberfläche auf insgesamt vier Magnus-Rotoren 10 werden die Abmessungen der einzelnen Magnus-Rotoren 10 verringert. Durch diese Anordnung der Magnus-Rotoren 10 bleibt eine größtmögliche durchgehende Fläche frei, welche insbesondere zum Be- und Entladen des Schiffes 1 dient sowie eine Aufnahme einer Deckenlast in Form von mehreren Containerladungen ermöglicht.

Während das Schiff vorliegend als mit vier Magnus-Rotoren ausgebildet dargestellt ist, sind alternativ auch davon abweichende Anzahlen und Anordnungen von Magnus-Rotoren und andere Aufteilungen des Antriebs bevorzugt vorzusehen.

Die Magnus-Rotoren 10 und der Hauptantrieb sind damit derart ausgelegt, dass der Hauptantrieb bei nicht ausreichendem Wind lediglich die Differenz der Leistung erbringen muss, die von den Magnus-Rotoren 10 nicht geliefert werden kann. Eine Steuerung des Antriebs erfolgt somit derart, dass die Magnus-Rotoren 10 die maximale Leistung oder annähernd die maximale Leistung erzeugen. Eine Steigerung der Leistung der Magnus-Rotoren 10 führt somit unmittelbar zu einer Einsparung an Brennstoff, da für den elektrischen Antrieb durch den Hauptantrieb keine zusätzliche Energie erzeugt werden muss. Die Einsparung an Brennstoff ergibt sich somit, ohne dass eine Anpassung zwischen einem durch eine Verbrennungsmaschine angetriebenen Propeller bzw. Hauptantrieb sowie der Steuerung der Magnus-Rotoren 10 benötigt wird.

Das Schiff 1 weist ein Wetterdeck 14 auf. Das Wetterdeck ist das zuoberst liegende Deck des Schiffes und außenliegend angeordnet. Auf dem Wetterdeck 14 sind Ladegüter verschiedenster Arten anordenbar.

Das Schiff 1 weist eine Längsachse 3 auf, die die parallel zu der Kiellinie und horizontal verlaufend angeordnet ist. Die Längsachse 3 entspricht somit bei gerader Fahrt (und ohne den Betrieb von Querstrahlrudern) der Fahrtrichtung des Schiffs 1.

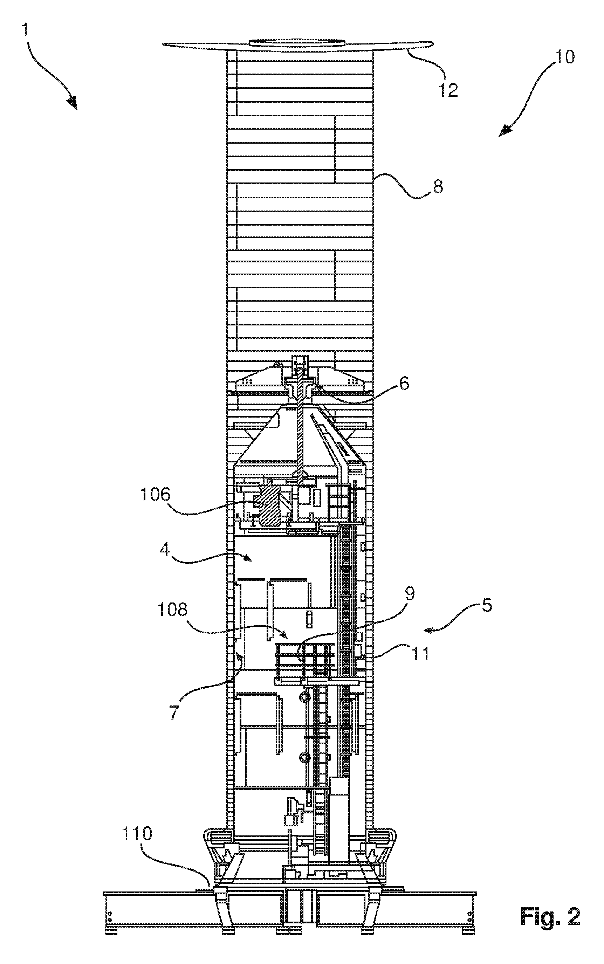

Figur 2 zeigt eine Schnittdarstellung des erfindungsgemäßen Magnus-Rotors 10 eines Schiffs 1. Der Magnus-Rotor 10 weist einen zylindrischen Rotorkörper 8 auf und eine im oberen Bereich angeordnete Endplatte 12. Der Rotor-Körper 8 ist mittels einer Lagerung 6 drehbar an einem Träger zur Aufnahme eines Magnus-Rotors 4 gelagert. Der Rotor-Körper 8 ist mittels Mitteln zur Kraftübertragung mit einem Antriebsmotor 106 in einem oberen Bereich der Aufnahme 4 verbunden. Der Träger zur Aufnahme des Magnus-Rotors 4 weist eine Innenfläche 7 auf. In einem unteren Bereich des Trägers zur Aufnahme des Magnus-Rotors 4 ist im Bereich der Innenwand 7 eine Messeinrichtung 5 angeordnet. Die Messeinrichtung 5 ist mittels einer Arbeitsbühne 108 erreichbar.

Die Messeinrichtung 5 ist dazu ausgebildet, eine Biegebeanspruchung des Trägers zur Aufnahme des Magnus-Rotors infolge einer im Wesentlichen radialen Kraftbeanspruchung der Lagerung 6 durch Krafteinwirkung auf den Rotor-Körper 8 zu bestimmen. Die Messeinrichtung weist zwei Dehnungssensoren 9,11 auf, welche im vorliegenden Beispiel in einem Winkel von 90° zueinander angeordnet sind.

Der Träger zur Aufnahme des Magnus-Rotors 4 ist mittels einer Flanschverbindung 110 mit dem Schiffsdeck verbunden.

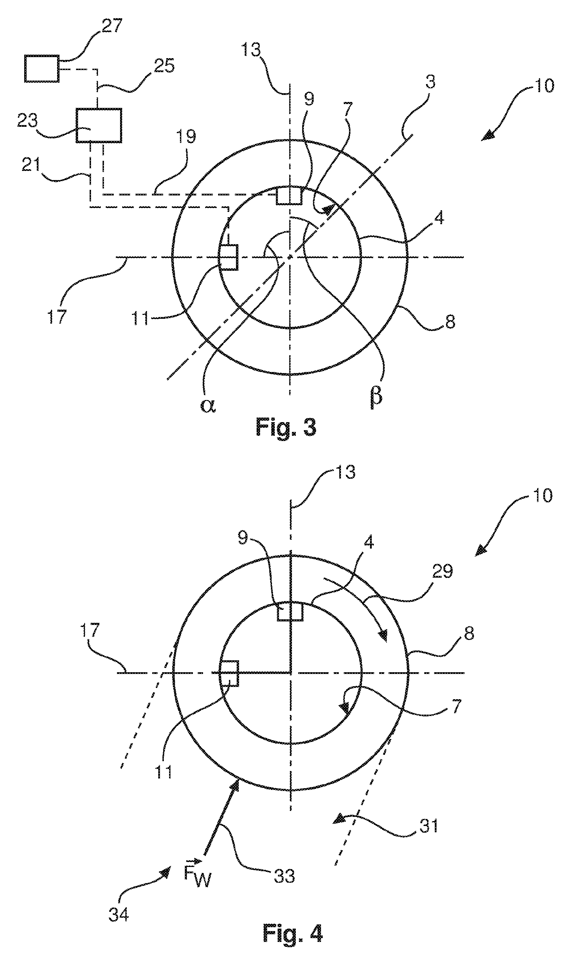

Eine schematische Querschnittsansicht durch einen Magnus-Rotor 10 gemäß der vorliegenden Erfindung ist in Figur 3 gezeigt. Der Magnus-Rotor 10 weist innerhalb des Rotor-Körpers 8 den Träger zur Aufnahme des Magnus-Rotors 4 auf. An der Innenfläche 7 des Trägers zur Aufnahme des Magnus-Rotors 4 sind als Teil der Messeinrichtung ein erster Dehnungssensor 9 und ein zweiter Dehnungssensor 11 angeordnet. Der erste Dehnungssensor 9 liegt vom Mittelpunkt des Trägers zur Aufnahme des Magnus-Rotors 4 aus betrachtet auf einer ersten Achse 13. Die erste Achse 13 verläuft in einem Winkel *β* zur Längsachse 3 des Schiffs. In einer besonders bevorzugten Ausführungsform ist der Winkel *β* = 0°. Der zweite Dehnungssensor 11 ist vom Mittelpunkt des Trägers zur Aufnahme des Magnus-Rotors 4 aus betrachtet entlang einer zweiten Achse 17 an der Innenfläche 7 des Trägers zur Aufnahme des Magnus-Rotors 4 angeordnet. In einer besonders bevorzugten Ausführungsform ist der Winkel zwischen der ersten Achse 13 und der zweiten Achse 17 *α* = 90°.

Der erste Dehnungssensor 9 ist mittels einer Signalleitung 19 mit einer Datenverarbeitungsanlage 23 verbunden. Der zweite Dehnungssensor 11 ist mittels einer zweiten Signalleitung 21 mit der Datenverarbeitungsanlage 23 verbunden. Die Datenverarbeitungsanlage 23 ist mittels einer dritten Signalleitung 25 mit einer Anzeigeeinrichtung 27 verbunden. Die Anzeigeeinrichtung 27 ist dazu ausgebildet, Richtung und Betrag der auf den Träger zur Aufnahme des Magnus-Rotors 4 wirkenden Vorschubkraft anzuzeigen. Die Datenverarbeitungsanalyse ist dazu eingerichtet, das erfindungsgemäße Verfahren auszuführen.

Die Figuren 4 bis 6 zeigen prinzipiell die gleiche Ansicht wie Figur 3, lediglich die schematisch angedeuteten Signalleitungen und die Datenverarbeitungsanlage sowie die Anzeigeeinrichtung sind weggelassen worden. Anhand der Figuren 4 bis 6 wird veranschaulicht, auf welche Weise die auf den Magnus-Rotor 10 einwirkende Kraft interpretiert und mittels der Messeinrichtung bestimmt wird.

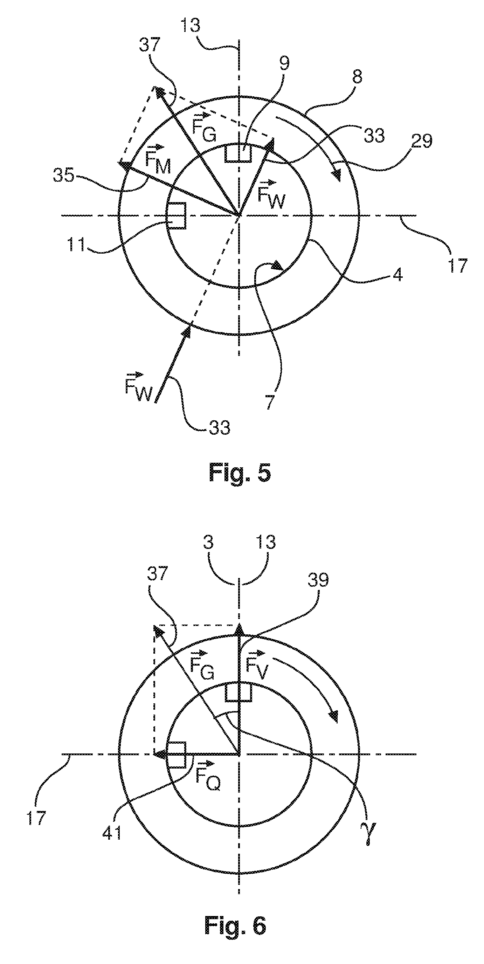

Beginnend mit Figur 4 ist festzustellen, dass der Magnus-Rotor 10 eine dem Wind abgewandte Seite sowie eine dem Wind zugewandte Seite 34 aufweist. Die dem Wind zugewandte Seite 34 weist eine Oberfläche auf, welche von Wind angeströmt wird. Die Richtung, aus welcher der Wind den Magnus-Rotor 10 anströmt weicht dabei von der tatsächlichen Windrichtung bei ortsfester Betrachtung ab, da das Schiff in der Regel in Bewegung ist. Wind trifft in Richtung des Pfeils 33 auf den Magnus-Rotor 10 auf, wodurch der Magnus-Rotor 10 in Richtung des Windes mit einer Kraft beaufschlagt wird. Nachfolgend wird diese als Windkraft oder kurz F_{W} bezeichnet. Der Magnus-Rotor 10 rotiert in Richtung des Pfeils 29. Hierdurch entsteht auf Grund des Magnus-Effekts eine Kraft in Richtung eines Pfeils 35, wie in Fig. 5 zu sehen ist. Diese Kraft wird nachfolgend als Magnus-Kraft oder kurz F_{M} bezeichnet. Der Vektor F_{M} verläuft orthogonal zu dem Vektor F_{W}.

Es wirkt auf den Träger zur Aufnahme des Magnus-Rotors 4 also eine Kraft, die sich aus der Windkraft F_{W} einerseits und der Magnus-Kraft F_{M} andererseits zusammensetzt. Die Addition der beiden Vektoren F_{W} und F_{M} resultiert in einem Vektor für die Gesamtkraft, nachfolgend als F_{G} bezeichnet. Der Vektor F_{G} verläuft in Richtung des Pfeils 37.

Figur 6 entspricht den Figuren 4 und 5, und auch Figur 3 mit der Ausnahme, dass die Längsachse 3 und die erste Achse 13, auf welcher der erste Dehnungssensor 9 liegt, in Figur 6 zusammenfallen. Die anhand der Figuren 4 und 5 bereits hergeleitete Gesamtkraft F_{G} in Richtung des Pfeils 37 lässt sich bei vektorieller Betrachtung in eine Summe zweier zueinander rechtwinkliger Vektoren interpretieren. Gemäß einer besonders bevorzugten Ausführungsform sind der erste Dehnungssensor 9 und der zweite Dehnungssensor 11 zueinander rechtwinklig angeordnet. In der Ausführungsform gemäß Figur 6 ist der erste Dehnungssensor in Fahrtrichtung und somit in Richtung der Längsachse 3 des Schiffs an der Innenseite des Trägers zur Aufnahme des Magnus-Rotors 4 angeordnet, während der zweite Dehnungssensor 11 orthogonal hierzu und somit im Wesentlichen exakt in Querrichtung des Schiffs entlang der zweiten Achse 17 angeordnet ist.

Der Vektor der Gesamtkraft F_{G} lässt sich folglich aufteilen in einen Vektor in Richtung der Längsachse 3 bzw. der ersten Achse 13 und in einen zweiten Vektor in Richtung der zweiten Achse 17. Der Anteil in Richtung der ersten Achse 13 bzw. der Längsachse 3 wird nachfolgend als F_{V} bezeichnet. Der Vektor in Richtung der zweiten Achse 17 wird nachfolgend als F_{Q} bezeichnet. F_{V} steht hierbei für Vorschubkraft und erstreckt sich in Richtung des Pfeils 39, während F_{Q} als Querkraft zu verstehen ist, und sich in Richtung des Pfeils 41 ausbreitet.

Je nach dem, in welche Richtung der Vektor F_{G} wirkt, unterscheidet sich die von dem ersten Dehnungssensor 9 festgestellte Biegebeanspruchung von der von dem zweiten Dehnungssensor 11 festgestellten Biegebeanspruchung. Das Verhältnis der Biegebeanspruchungen in den Richtungen der Pfeile 39 und 41 zueinander ändert sich mit einem Winkel *γ* zwischen der Gesamtkraft F_{G} in Richtung des Pfeils 37 und einer der beiden Achsen 13 und 17. Für den Fall, dass die von dem ersten Dehnungssensor und dem zweiten Dehnungssensor 11 erfassten Biegebeanspruchungen gleich groß sind, beträgt der Winkel zwischen der Gesamtkraft F_{G} und der Vorschubkraft F_{V} *γ =* 45°. Für den Fall, dass beispielsweise die von dem ersten Dehnungssensor 9 festgestellte Biegebeanspruchung doppelt so groß ist wie die von dem zweiten Dehnungssensor 11 festgestellte Biegebeanspruchung, beträgt der Winkel von F_{G} zu F_{V} bzw. zu der ersten Achse 13 *γ* = 30°.

Allgemein formuliert ergibt sich folglich der Winkel *γ* zwischen F_{G} und F_{V} aus der Beziehung *γ* = arctan (Signalwert des ersten Dehnungssensors 11 / Signalwert des zweiten Dehnungssensors 9).

Ebenso lässt sich aus den beiden von den einzelnen Dehnungssensoren 9, 11 ermittelten Signalwerten zusätzlich zu dem Winkel der angreifenden Kraft F_{G} deren Betrag im Verhältnis zu wahlweise dem ersten oder zweiten Dehnungssensor-Messwert ermitteln. Der Betrag des Vektors ergibt sich aus der Beziehung F_{G}= F_{V}/cos(*γ*) bzw. Signalwert-Äquivalent = (Signalwert des ersten Dehnungssensors 9) / cos *γ*)

## Patentansprüche

1. Schiff (1), insbesondere Frachtschiff, mit mindestens einem Magnus-Rotor (10) zum Antrieb des Schiffs (1), welcher einen feststehenden Träger zur Aufnahme des Magnus-Rotors (4) aufweist,
**dadurch gekennzeichnet, dass** an dem Träger (4) eine Messeinrichtung (5) zur Bestimmung einer Biegebeanspruchung des Trägers (4) angeordnet ist.

2. Schiff (1) nach Anspruch 1,
**dadurch gekennzeichnet, dass** die Messeinrichtung (5) zwei Dehnungssensoren (9, 11) aufweist, die an einer Umfangsfläche des Trägers (4) angeordnet und winklig zueinander beabstandet sind, vorzugsweise in einem Winkel von 90° zueinander.

3. Schiff (1) nach Anspruch 2,
**dadurch gekennzeichnet, dass** ein erster Dehnungssensor (9) bezogen auf eine Rotationsachse des Magnus-Rotors (10) in Längsrichtung des Schiffs (1) angeordnet ist und ein zweiter Dehnungssensor (11) bezogen auf die Rotationsachse des Magnus-Rotors (10) in Querrichtung des Schiffs (1) angeordnet ist.

4. Schiff (1) nach Anspruch 2 oder 3,
**dadurch gekennzeichnet, dass** der erste und der zweite Dehnungssensor (9, 11) in einer horizontalen Ebene angeordnet sind.

5. Schiff (1) nach Anspruch 3 oder 4,
**dadurch gekennzeichnet, dass** der Träger (4) mindestens in dem Abschnitt, in welchem der erste und der zweite Dehnungssensor (9, 11) angeordnet sind, zylindrisch ausgebildet ist.

6. Schiff (1) nach einem der Ansprüche 3 bis 5,
**dadurch gekennzeichnet, dass** der erste Dehnungssensor (9) und der zweite Dehnungssensor (11) jeweils zur Ausgabe eines Signals eingerichtet sind, welches repräsentativ für die von den Sensoren erfasste Dehnung ist.

7. Schiff (1) nach Anspruch 6,
**dadurch gekennzeichnet, dass** das Schiff (1) eine Datenverarbeitungsanlage (23) zur Aufnahme der ausgegebenen Signale aufweist, die zur Ermittlung eines Gesamtkraftvektors F_{G} (37) auf Basis der ausgegebenen Signale eingerichtet ist.

8. Schiff (1) nach Anspruch 7,
**dadurch gekennzeichnet, dass** die Datenverarbeitungsanlage (23) dazu ausgebildet ist, mittels des Verhältnisses der Stärken der ausgegebenen Signale die Richtung des Gesamt-Kraftvektors F_{G} (37) zu bestimmen, und/oder
mittels des Verhältnisses der Stärken der ausgegebenen Signale sowie den Werten der ausgegebenen Signale den Betrag des Gesamt-Kraftvektors F_{G} (37) zu bestimmen.

9. Schiff (1) nach einem der vorstehenden Ansprüche,
**dadurch gekennzeichnet, dass** der erste Dehnungssensor (9) und/oder der zweite Dehnungssensor (11) jeweils mindestens einen Dehnungsmessstreifen, und/oder ein Dehnungsmessröhrchen, und/oder einen optischen Dehnungssensor aufweisen.

10. Träger (4) zur Aufnahme eines Magnus-Rotors (10), der zum Antrieb eines Schiffs (1) eingerichtet ist,
**dadurch gekennzeichnet, dass** der Träger (4) eine Messeinrichtung (5) zur Bestimmung einer Biegebeanspruchung des Trägers (4) aufweist.

11. Verfahren zur Bestimmung des Vorschubs eines Magnus- Rotors (10), umfassend die folgenden Schritte:
- Erfassen der Biegebeanspruchung eines Trägers (4) zur Aufnahme des Magnus-Rotors (10) mittels einer dazu ausgebildeten Messeinrichtung (5),
- Ausgabe eines die Biegebeanspruchung der Rotoraufnahme (4) in Fahrtrichtung des Schiffs (1) repräsentierenden Signals mittels eines ersten Dehnungssensors (9) der Messeinrichtung (5), und
- Bestimmen der Kraftkomponente (39), welche der von dem ersten Dehnungssensor (9) erfassten Biegebeanspruchung entspricht, als Vorschubkraft F_{V}.

12. Verfahren nach Anspruch 11, umfassend die zusätzlichen Schritte:
- Ausgabe eines die Biegebeanspruchung der Rotoraufnahme (4) in Querrichtung des Schiffs (1) repräsentierenden Signals mittels eines zweiten Dehnungssensors (11) der Messeinrichtung (5),
- Bestimmen der Kraftkomponente (41) welche der von dem zweiten Dehnungssensor erfassten Biegebeanspruchung entspricht, als Querschubkraft F_{Q},

13. Verfahren nach Anspruch 11 oder 12, umfassend die zusätzlichen Schritte:
- Bestimmen der Richtung des Gesamt-Kraftvektors F_{G}(37) mittels des Verhältnisses der Stärken der ausgegebenen Signale des ersten und zweiten Dehnungssensors (9, 11), und/oder
- Bestimmen des Betrags des Gesamt-Kraftvektors F_{G}(37) mittels des Verhältnisses der Stärken der ausgegebenen Signale sowie den Werten der ausgegebenen Signale.

## Claims

1. A ship (1), in particular a cargo ship, comprising at least one Magnus rotor (10) for driving the ship (1), which has a stationary carrier (4) for mounting the Magnus rotor (10),
**characterised in that** arranged on the carrier (4) is a measuring device (5) for determining a flexural loading on the carrier (4).

2. A ship (1) according to claim 1 **characterised in that** the measuring device (5) has two strain gauge sensors (9, 11) which are arranged at a peripheral surface of the carrier (4) and are spaced angularly relative to each other, preferably at an angle of 90° relative to each other.

3. A ship (1) according to claim 2 **characterised in that** a first strain gauge sensor (9) is arranged with respect to an axis of rotation of the Magnus rotor (10) in the longitudinal direction of the ship (1) and a second strain gauge sensor (11) is arranged with respect to an axis of rotation of the Magnus rotor (10) in the transverse direction of the ship (1).

4. A ship (1) according to claim 2 or claim 3 **characterised in that** the first and second strain gauge sensors (9, 11) are arranged in a horizontal plane.

5. A ship (1) according to one of claims 3 or 4 **characterised in that** the carrier (4) is cylindrical at least in the portion in which the first and second strain gauge sensors (9, 11) are arranged.

6. A ship (1) according to one of claims 3 to 5 **characterised in that** the first strain gauge sensor (9) and the second strain gauge sensor (11) are respectively adapted to output a signal representative of the strain detected by the sensors.

7. A ship (1) according to claim 6 **characterised in that** the ship (1) has a data processing installation (23) for receiving the outputted signals, which is adapted to ascertain an overall Force vector F_{G} (37) on the basis of the outputted signals.

8. A ship (1) according to claim 7 **characterised in that** the data processing installation (23) is adapted
to determine the direction of the overall Force vector F_{G} (37) by means of the ratio of the strengths of the outputted signals, and/or
to determine the magnitude of the overall Force vector F_{G} (37) by means of the ratio of the strengths of the outputted signals and the values of the outputted signals.

9. A ship (1) according to one of the preceding claims **characterised in that** the first strain gauge sensor (9) and/or the second strain gauge sensor (11) each have at least one strain measuring strip and/or strain measuring tube and/or optical strain sensor.

10. A carrier (4) for mounting a Magnus rotor (10) which is adapted to drive a ship (1),
**characterised in that** the carrier (4) has a measuring device (5) for determining a flexural loading on the carrier (4).

11. A method of determining the thrust of a Magnus rotor (10) including the steps:
- detecting the flexural loading on a carrier (4) for mounting the Magnus rotor (10) by means of a measuring device (5) adapted thereto,
- outputting a signal representing the flexural loading on the rotor mounting (4) in the direction of travel of the ship (1) by means of a first strain gauge sensor (9) of the measuring device (5),
- determining the force component (39) corresponding to the flexural loading detected by the first strain gauge sensor (9), as a thrust force F_{V}.

12. The method of claim 11, further comprising the steps of:
- outputting a signal representing the flexural loading on the rotor mounting (4) in the transverse direction of the ship (1) by means of a second strain gauge sensor (11) of the measuring device (5),
- determining the force component (41) corresponding to the flexural loading detected by the second strain gauge sensor, as a transverse thrust force F_{Q}.

13. The method of claim 11 or 12, further comprising the steps of:
- determining the direction of the overall force vector F_{G} (37) by means of the ratio of the strengths of the outputted signals of the first and second strain gauge sensors (9, 11), and/or
- determining the magnitude of the force vector F_{G} (37) by means of the ratio of the strengths of the outputted signals and the values of the outputted signals.

## Revendications

1. Navire (1), en particulier cargo avec au moins un rotor à effet Magnus (10) pour l'entraînement du navire (1) qui présente un support fixe pour la réception du rotor à effet Magnus (4),
**caractérisé en ce qu'**un dispositif de mesure (5) est agencé sur le support (4) pour la détermination d'une sollicitation de flexion du support (4).

2. Navire (1) selon la revendication 1,
**caractérisé en ce que** le dispositif de mesure (5) présente deux capteurs d'allongement (9, 11) qui sont agencés sur une surface périphérique du support (4) et espacés angulairement l'un à l'autre, de préférence dans un angle de 90° l'un par rapport à l'autre.

3. Navire (1) selon la revendication 2,
**caractérisé en ce qu'**un premier capteur d'allongement (9) est agencé par rapport à un axe de rotation du rotor à effet Magnus (10) dans le sens longitudinal du navire (1) et un second capteur d'allongement (11) est agencé par rapport à l'axe de rotation du rotor à effet Magnus (10) dans le sens transversal du navire (1).

4. Navire (1) selon la revendication 2 ou 3,
**caractérisé en ce que** le premier et le second capteur d'allongement (9, 11) sont agencés dans un plan horizontal.

5. Navire (1) selon la revendication 3 ou 4,
**caractérisé en ce que** le support (4) est réalisé de manière cylindrique au moins dans la section, dans laquelle le premier et le second capteur d'allongement (9, 11) sont agencés.

6. Navire (1) selon l'une quelconque des revendications 3 à 5,
**caractérisé en ce que** le premier capteur d'allongement (9) et le second capteur d'allongement (11) sont aménagés respectivement pour l'émission d'un signal qui est représentatif de l'allongement détecté par les capteurs.

7. Navire (1) selon la revendication 6,
**caractérisé en ce que** le navire (1) présente une installation de traitement de données (23) pour la réception des signaux émis qui est aménagée pour la détermination d'un vecteur de force global F_{G}(37) sur la base des signaux émis.

8. Navire (1) selon la revendication 7,
**caractérisé en ce que** l'installation de traitement de données (23) est réalisée afin de déterminer, à l'aide du rapport entre les intensités des signaux émis, le sens du vecteur de force global F_{G}(37) et/ou
de déterminer, à l'aide du rapport entre les intensités des signaux émis ainsi que les valeurs des signaux émis, la somme du vecteur de force global F_{G}(37).

9. Navire (1) selon l'une quelconque des revendications précédentes,
**caractérisé en ce que** le premier capteur d'allongement (9) et/ou le second capteur d'allongement (11) présentent respectivement au moins une jauge extensométrique et/ou un petit tube de mesure d'extension et/ou un capteur d'allongement optique.

10. Support (4) pour la réception d'un rotor à effet Magnus (10) qui est aménagé pour l'entraînement d'un navire (1),
**caractérisé en ce que** le support (4) présente un dispositif de mesure (5) pour la détermination d'une sollicitation de flexion du support (4).

11. Procédé de détermination de l'avance d'un rotor à effet Magnus (10) comprenant les étapes suivantes :
- la détection de la sollicitation de flexion d'un support (4) pour la réception du rotor à effet Magnus (10) à l'aide d'un dispositif de mesure (5) réalisé à cet effet,
- l'émission d'un signal représentant la sollicitation de flexion du logement de rotor (4) dans le sens de déplacement du navire (1) à l'aide d'un premier capteur d'allongement (9) du dispositif de mesure (5) et
- la détermination de la composante de force (39) qui correspond à la sollicitation de flexion détectée par le premier capteur d'allongement (9) comme force d'avance F_{V}.

12. Procédé selon la revendication 11, comprenant les étapes supplémentaires :
- l'émission d'un signal représentant la sollicitation de flexion du logement de rotor (4) dans le sens transversal du navire (1) à l'aide d'un second capteur d'allongement (11) du dispositif de mesure (5),
- la détermination de la composante de force (41) qui correspond à la sollicitation de flexion détectée par le second capteur d'allongement comme force de poussée transversale F_{Q}.

13. Procédé selon la revendication 11 ou 12, comprenant les étapes supplémentaires :
- la détermination du sens du vecteur de force global F_{G}(37) à l'aide du rapport entre les intensités des signaux émis du premier et second capteur d'allongement (9, 11) et/ou
- la détermination de la somme du vecteur de force global F_{G}(37) à l'aide du rapport entre les intensités des signaux émis ainsi que les valeurs des signaux émis.
